# EUROPEAN PATENT APPLICATION

(11) **EP 3 964 356 A1**
(43) Date of publication of application: **09.03.2022**
(21) Application number: 20194370.1
(22) Date of filing: 03.09.2020
(51) Int. Cl.: B31F 1/07, B29C 33/00, B82Y 40/00

(54) **A METHOD AND SYSTEM FOR MANUFACTURING AN EMBOSSING DEVICE BY USING AN ETCH MASK**

(71) Applicant: Boegli-Gravures SA, 2074 Marin-Epagnier (CH)
(72) Inventor: BOEGLI, Charles, 2074 Marin-Epagnier (CH); DUMITRU, Gabriel, 5415 Nussbaumen (CH)
(74) Representative: Weihs, Bruno Konrad

(57) **Abstract**

A method for manufacturing a structured embossing cylinder for embossing system including the steps of providing a hard-coated embossing roller having a cylindrically-shaped core and a hard-coating layer on the cylindrically-shaped core, the hard-coating layer having a thickness in a range between 1 µm and 10 µm, and having a surface-roughness value RA of less than 100 nm, depositing a masking layer on the hard-coating layer, the masking layer having a thickness of equal or less than 100 nm, removing material from the masking layer to form at least one opening, and etching to remove material at the at least one opening of the masking layer from the hard-coating layer to form a surface cavity in the hard-coating layer at the at least one opening, the surface cavity forming a structural embossing feature into the hard-coating layer, thereby forming the structured embossing cylinder.

## Description

### FIELD OF THE INVENTION

The present invention is directed to the field of embossing devices, such as embossing rollers, rolls, drums, plates and cylinders, more specifically to the field of methods for manufacturing an embossing device having embossing structures on the outer surfaces, and a corresponding manufacturing system, for example for embossing devices for embossing packaging materials, the use of such embossing devices for embossing packaging materials.

### BACKGROUND

In the state of the art, different methods have been proposed to manufacture embossing rollers for different application fields. For example, embossed or structured packaging foils have been used in various industry sectors for packaging, for example for tobacco products, food products such as chocolate, sweets, candy, but also for devices such as electronic components and devices, jewelry, watches, or as wrapping packaging foils for gift packaging for any retail sector. For example, so-called inner liners have been used that can be wrapped around cigarettes, cigars, chocolates for esthetic and protection purposes, having specific patterns. The embossing roller can be used in a continuous roll-to-roll (R2R) manufacturing process, where thin foils are embossed with embossed patterns that can include metallic, transparent conductive, non-metallic, dielectric, etc. elements. Another application field is the creation of embossed patterns using a thermoplastic film, with a hot-embossing process, for example by R2R or a roll-to-plate (R2P) process, for example hot embossing of thermoplastic polymer films. See for example Peng et al., "Micro Hot Embossing of Thermoplastic Polymers: a Review," Journal of Micromechanics and Microengineering, Vol. 24, No. 1, p. 013001, 2013.

With respect to the manufacturing of embossing rollers or drums by a laser process for a cooperating pair of rollers, U.S. Patent No. 9,579,924 that is herewith incorporated by reference in its entirety, describes a method for manufacturing a set of embossing rollers having a male roller and female roller, the structural elements thereof having specific structural features with respect to voluntary deviations of linear and angular dimensions. The structuration of the set of embossing rollers are manufactured independently by laser device L12 that has a laser 12 and a deflection unit 14 that may comprise beam splitters as well as acoustic-optical or electro-optical modulators or polygon mirrors. Deflection unit 14, focusing optics 15, and deflection mirror 16 form engraving unit 17 that is linearly displaceable in the x-axis. The work piece is driven by a drive 23, which is symbolized by rotation angle ϕ. By the combination of the linear displacement of the engraving unit and of the rotation of the roller, a constant helical line SL is created that allows a uniform machining.

Moreover, U.S. Patent No. 8,435,373 that is herewith incorporated by reference in its entirety, describes different R2R process/apparatus for forming desired patterns on a flexible substrate by removal and/or addition of material, where a rotary patterning tool having an embossing surface with embossments in a roll-to-roll embossing process is performed, for example for in-situ mask layer can be made with numerous materials and by various techniques suitable for forming polymeric three-dimensional (3D) relief patterns.

Furthermore, U.S. Patent No. 9,993,895 that is herewith incorporated by reference in its entirety, a laser-processing method for engraving embossing rollers is described, that are coated with a very hard surface coating, for example tetrahedral amorphous carbon (Ta-C), to provide for two superposed and very small embossing structures that can have dimensions that are smaller than one micrometer, preferably having a depth of 300 nm. This allows embossing foils that will have different visible multi-chromatic optical diffraction effects.

In addition, U.S. Patent Publication No. 2017/0066079 that is herewith incorporated by reference in its entirety, a device for the mask projection of femtosecond or picosecond laser beams (2) onto a substrate surface is described, in which the laser beam 2, at a location of the optical axis, makes laser-beam pulses with an expanded laser-beam cross section or laser-beam pulses with a reduced laser-beam cross section, and where specific vacuum cuvettes 18, 20, 23 are used to avoid a formation of plasma at location of laser focusing points 17, 19, 22, one of the vacuum cuvettes 20 having a pinhole aperture 26 close to the work piece, a surface 12 of a substrate 13 that is subject to laser ablation.

However, despite all the improvements to the processes for manufacturing an embossing device, such as a roller, drum, or cylinder, and the different fields of application, novel and substantially improved methods and resulting embossing devices are still desired, specifically to provide embossing devices such as rollers or cylinders having substantially improved durability and lifecycle. For example, one problem is the presence of rather high surface roughness on otherwise planar or curved inner surfaces when removing material with laser-based methods, for example by laser engraving or ablation, especially for surfaces that lie inside the embossing structures themselves, that can lead to high abrasion and undesired optical effects in the ultimately embossed films and foils, for example creating optical blur and a reduction of the optical qualities of these structures. Another problem are effects resulting from excessive heat when removing material with laser-based methods, which can lead to changes in material properties of the coating layer and can thereby negatively impact surface hardness and structural integrity. Therefore, strongly improved methods are desired for manufacturing structured embossing or molding tools, for example embossing cylinders, rollers or drums.

### SUMMARY

According to one aspect of the present invention, a method for manufacturing a structured embossing cylinder for an embossing system is provided. Preferably, the method includes the steps of providing a hard-coated embossing roller having a cylindrically-shaped core and a hard-coating layer on the cylindrically-shaped core, the hard-coating layer having a thickness in a range between 1 µm and 10 µm, and having a surface-roughness value RA of less than 100 nm, and depositing a masking layer on the hard-coating layer, the masking layer having a thickness of equal or less than 100 nm. Moreover, the method further preferably includes the steps of removing material from the masking layer to form at least one opening, and to remove material from the hard-coating layer at the at least one opening in the masking layer to form a surface cavity at the at least one opening, the surface cavity forming a structural embossing feature into the hard-coating layer, thereby forming the structured embossing cylinder. According to still another aspect of the present invention, the step of removing material from the mask layer can be performed by laser ablation, or can be performed by e-beam structuration.

According to another aspect of the present invention, a structured embossing device is provided. Preferably, the structured embossing device includes a base, an adhesion layer on the base, a hard-coating layer on the adhesion layer having a thickness in a range between 1 µm and 10 µm and an RA roughness value of less than 100 nm, a masking layer on the hard-coating layer having a thickness of less than 50 nm, and an embossing structuration arranged in a surface of the hard-coating layer the embossing structuration traversing the masking layer. Moreover, preferably, a depth of a surface cavity formed by the embossing structuration is between 50 nm and 10 µm, a width of the surface cavity is between 100 nm and 10 µm, and the ratio between the depth and the width of the cavity is in a range between 0.1 and 2.

According to yet another aspect of the present invention, a method for manufacturing a structured embossing cylinder for an embossing system is provided. Preferably, the method includes the steps of comprising the steps of providing a hard-coated embossing roller having a cylindrically-shaped core and a hard-coating layer on the cylindrically-shaped core, the hard-coating layer having a thickness in a range between 1 µm and 10 µm, and having a surface-roughness value RA of less than 100 nm, depositing a masking layer on the hard-coating layer, the masking layer having a thickness of equal or less than 100 nm, performing e-beam writing into a provided e-beam resist layer on top of the masking layer, developing and removing e-beam resist layer to exposing the masking layer, etching the masking layer with an etchant that does not affect the hard-coating layer, and etching the hard-coating layer to form a surface cavity into the hard-coating layer, the surface cavity forming a structural embossing feature into the hard-coating layer.
According to still another aspect of the present invention, an injection mold is provided. Preferably, the injection mold includes a base, an adhesion layer on the base, a hard-coating layer on the adhesion layer having a thickness in a range between 1 µm and 10 µm and an RA roughness value of less than 100 nm, an inorganic masking layer on the hard-coating layer having a thickness of less than 100 nm, and a molding cavity arranged in a surface of the hard-coating layer, the molding cavity traversing the masking layer, and wherein a depth of a surface opening formed by the molding cavity is between 50 nm and 7 µm, and a width of the surface cavity is between 100 nm and 10 µm. The above and other objects, features and advantages of the present invention and the manner of realizing them will become more apparent, and the invention itself will be understood best from a study of the following description and appended claims with reference to the attached drawings showing some preferred embodiments of the invention.

### BRIEF DESCRIPTION OF THE SEVERAL VIEWS OF THE DRAWINGS

The accompanying drawings, which are incorporated herein and constitute part of this specification, illustrate the presently preferred embodiments of the invention, and together with the general description given above and the detailed description given below, explain features of the invention.

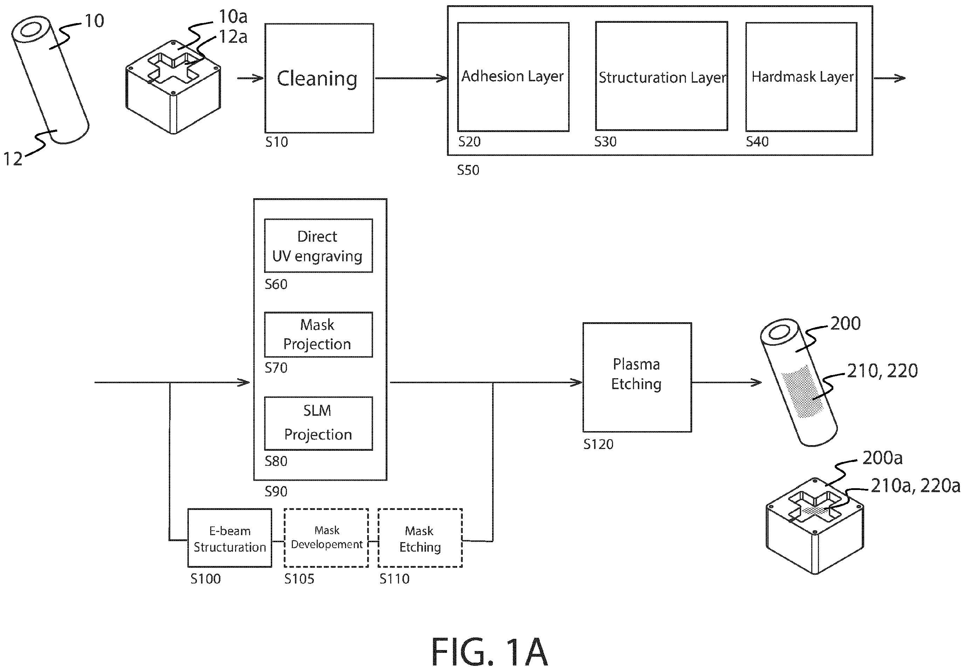

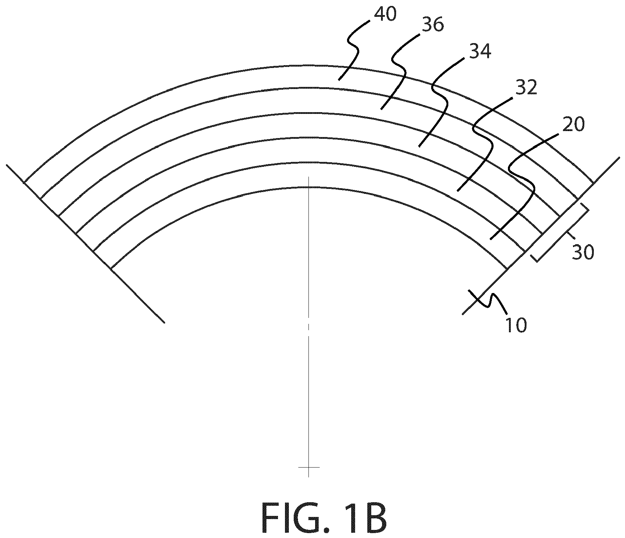

FIGs. 1A and 1B show a flowchart of an exemplary method for manufacturing an embossing device 200, 200a and aspects thereof, with FIG. 1A showing a schematic overview of the steps of the method for manufacturing an embossing device 200, 200a in the variant shown an embossing cylinder, roller or drum 200 or an embossing plate 200a, according to one aspect of the present invention, and FIG. 1B showing a basic layering of (hard) coatings 20, 30, 32, 34, 36, 40 on top of a metal cylinder, core or base 10;

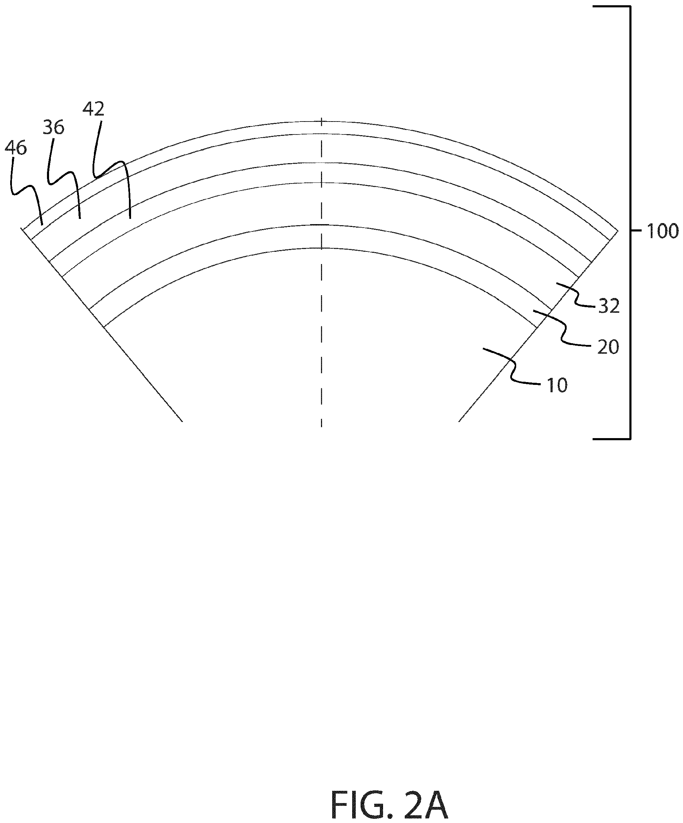

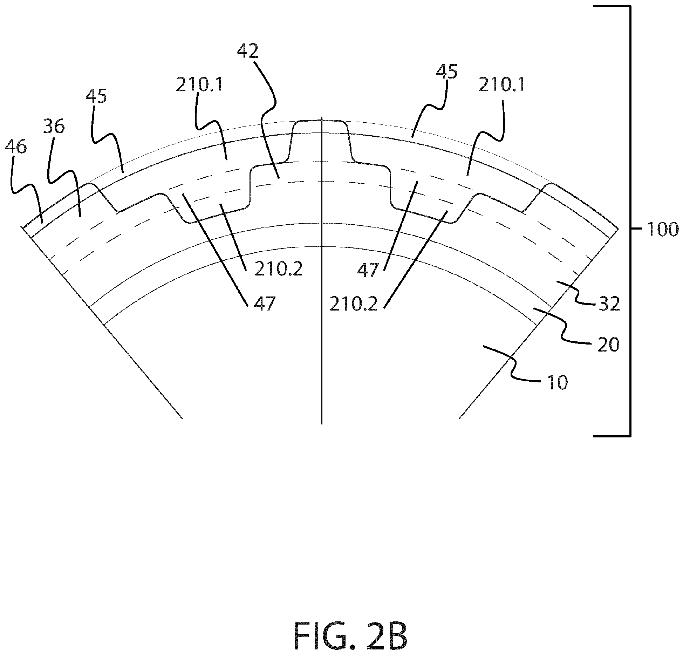

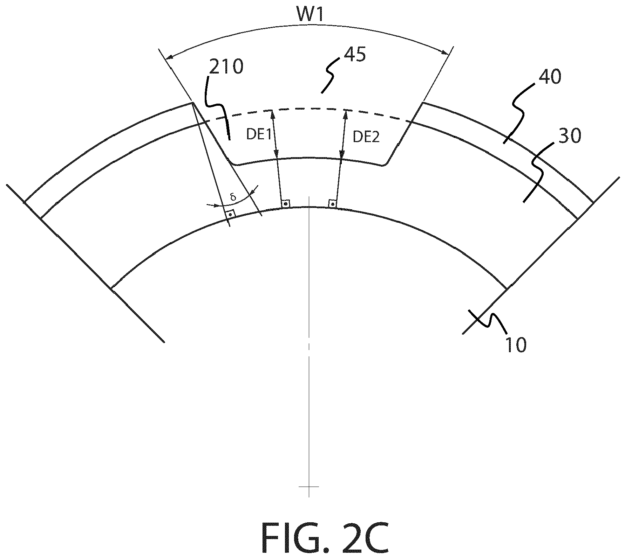

FIGs. 2A to 2C show cross-sectional views of a base 10 of a processed cylinder, drum, or roller that has a plurality of layers deposited thereon as a multilayer structure, with FIG. 2A showing a cross-sectional view of the multilayer structure before removing any material from layers, including an adhesion layer 20, a first inner structure bearing layer 32 made of a hard material coating, a first masking layer 42, a second outer structure bearing layer 36, and a second masking layer 46, allowing to form a multilayered three-dimensional opening into embossing device by successive mask removal steps for removing portions of masking layers 42, 46, respectively, and etching steps for removing material of structure bearing layers 32, 36, and FIG. 2B showing an embossing drum, roller or cylinder 200 having a multi-layer structuration 210 formed therein, by successive laser-ablation and etchings steps, and FIG. 2C showing a cross-sectional view of a multilayer structure;

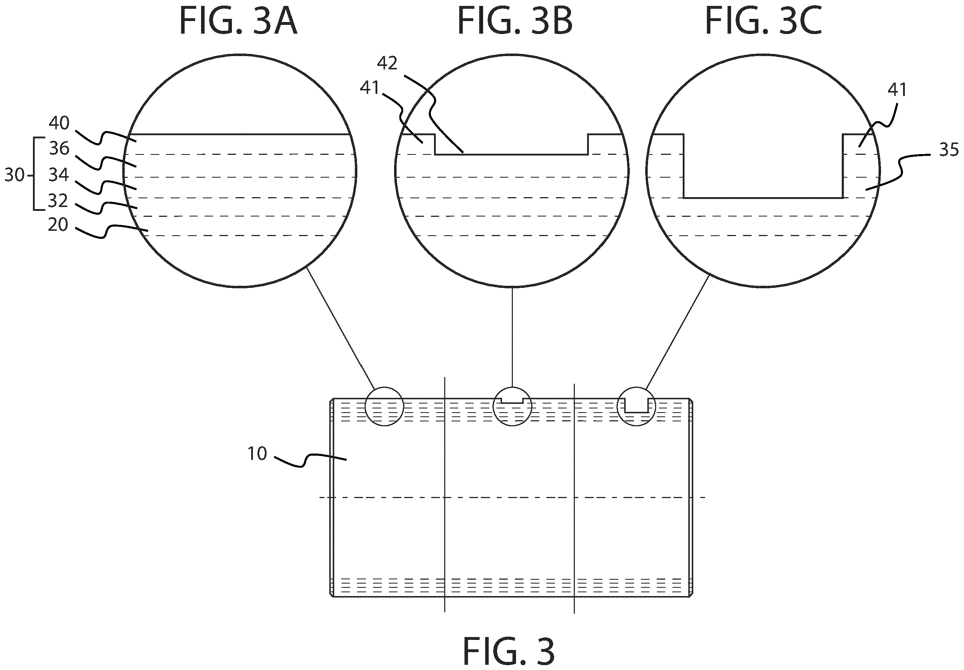

FIGs. 3A to 3C exhibit exemplary cross-sectional views of a processed base, drum, or roller 10 with a multilayer hard coating that has been processed multiply with FIG. 3A no etching attack, FIG. 3B one (1) etched layer and FIG. 3C three (3) etched layers; and

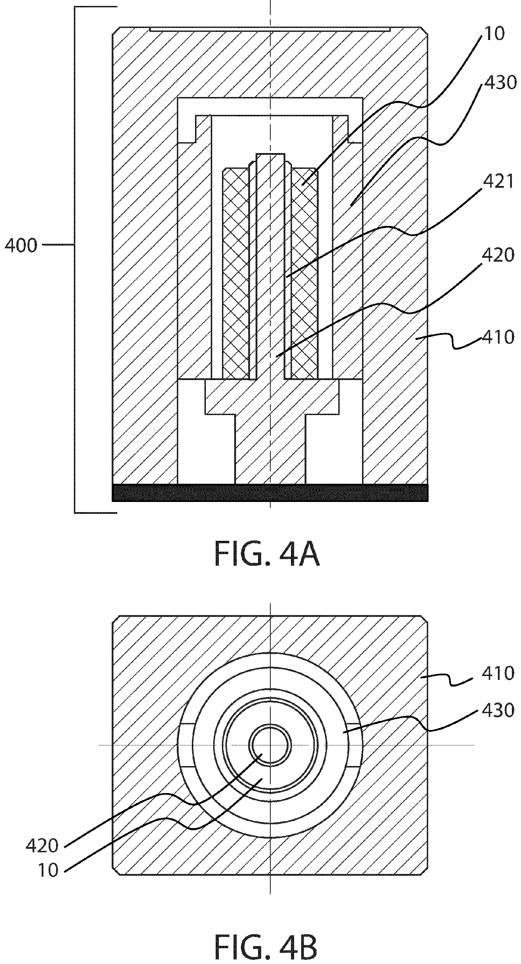

FIGs. 4A and 4B show the exemplary and schematic system for plasma-etching a cylindrically-shaped device, for placing of a base, drum, or roller 10 to be dry-etched by the plasma-etching equipment 400 with a cross-sectional side view in FIG. 4A and a cross-sectional top view in FIG. 4B.
Herein, identical reference numerals are used, where possible, to designate identical elements that are common to the figures. In addition, the images in the drawings are simplified for illustration purposes and may not be depicted to scale.

### DETAILED DESCRIPTION OF THE EMBODIMENTS

First, the different steps of a method for manufacturing a device that can be used for embossing, molding or replication processes, for example an embossing roller, cylinder or drum 200, or a mold 200a having one or more molding cavities, is explained with an exemplary embodiment, and an exemplary schematic representation of the method is shown in FIG. 1A. A cylinder-shaped metal cylinder, core or base 10 is provided, serving as a base for the embossing roller. A diameter of the cylindrically shaped metal cylinder, core or base 10 can be in a range between 50 mm and 500 mm, but other diameters are also possible. Next, the cylindrically shaped metal core or base 10 is processed to have an outer cylindrical surface 12 with a smooth surface and specific hardness. Preferably, the metal core or base 10 has been processed such that it has a surface roughness with a surface-profile roughness parameter (RA) preferably to be below 100 nm, more preferably in a range between 10 nm to 50 nm. With respect to the hardness, a material is chosen for core or base 10 such that outer cylindrical surface 12 should have a certain hardness value above 0.3 GPa (roughly equivalent to 300 Vickers). Both the hardness value and the surface-roughness value are preferred features, as these values in these ranges will allow manufacturing an embossing roller having a specific durability and allows operation and a desired nip pressure, and will also allow to manufacture embossing structures of a certain level of granularity, as further explained below. For example, a surface roughness of the outer cylindrical surface 12 needs to be substantially better, i.e., less rough than the embossing patterns that will be manufactured. Some aspects of the herein discussed method describe the different processing steps based on a cylindrically-shaped element, as cylinder, core, or base 10 made of metal or a ceramic, but it is also possible to process a planar device 10a having an outer surface 12a that will be processed with a method that is similar, for example a plate, sheet, panel, or a flat substrate that is made of metal or a ceramic material, to manufacture embossing plates, panels, or stamps, injection molds with molding cavities, or molding casts 200a.

In a variant, core or base 10 is a hollow cylinder having a traversing bore along its rotational axis, so that an embossing device 200 having a reduced weight can be provided, or can be more easily mounted or installed to a bolt or rod for installation to an embossing or other type of machine, or can be used for installing rotational bearings inside traversing bore. In another variant, core or base 10 need not be made of metal, but can be a composite material such as a hard-metal material, a sintered material, for example but not limited to a cermet.

Thereafter, cylinder-shaped metal cylinder or core 10 is processed by a cleaning step S10 where outer surface 12 of core 10 is degreased and thoroughly cleaned. For example, cleaning step S10 can include a step of subjecting the cylindrically shaped metal core or base 10 to a cleaning apparatus where the cylinder is cleaned by complete immersion in a bath of demineralized water and detergents in a special cleaning machine capable of generating ultrasonic cleaning cycles, followed by the possible use of an oxidation inhibitor in the last rinsing step when the detergent is removed from the surface. Then, the cleaned cylindrically shaped metal cylinder or core 10 is provided to a vacuum chamber of a deposition system, for example a physical vapor deposition (PVD) device or system having a coating chamber for further processing.

Next, the coating chamber is evacuated and heated, and the cylindrically shaped metal cylinder, core, or base 10 is rotated around its longitudinal axis. Next, the surface of the cylindrically shaped metal cylinder, core or base 10 is exposed to a plasma cleaning process using, e.g., Argon plasma to activate the surface before a coating is deposited and to remove organic traces left on the surface. Next, in a depositing step S20, an adhesion layer 20 is deposited onto the outer cylindrical surface 12 of the cylindrically shaped metal cylinder or core or base 10 by a form of PVD or chemical vapor deposition (CVD), for example reactive sputter deposition. This step S20 can be performed by rotating the cylindrically shaped metal cylinder, core or base 10 around its rotational axis with a rotation device and simultaneously exposing the cylindrical surface 12 of base 10 to a highly energetic plasma contained and maintained by a magnetic field between the top and bottom electrode of a plasma processing chamber. The adhesion layer 20 is preferably a material that is inorganic, for example TiN or another type of nitride or oxide, for example but not limited to CrN, as well as pure metal layers such as but not limited to Cr and Ti, and can be between several tens and several hundreds of nanometers in thickness, for example preferably less than 500 nm, more preferably less than 200 nm, even more preferably in a range between 100 nm and 200 nm.

Next, in a step S30, a hard-coating layer or structuration-bearing layer 30 is deposited onto adhesion layer 20 as shown in FIG. 1B, preferably inside the same plasma-processing chamber that was used for the deposition of adhesion layer 20, for example without opening the processing chamber, while cylindrically shaped metal cylinder or core or base 10 with adhesion layer 20 is rotated around its rotational axis. The structuration-bearing layer 30 is substantially thicker than adhesion layer 20, but preferably less than 20 µm, for example having a thickness in a range between 1 µm and 10 µm. As this layer 30 is later processed to remove material to form openings or cavities into layer 30 for forming different types of structural features, layer 30 is herein referred as to a structuration-bearing layer 30. The structuration-bearing layer 30 is preferably made from a hard material, preferably a carbon-based hard material, for example Diamond-Like Carbon (DLC), more preferably Ta-C. In this respect, aside from providing adhesion, adhesion layer 20 also acts as a shock absorber or transition layer to decrease detrimental mechanical consequences of bonding a comparatively soft material, for example the core or base 10 that can be made of steel, to an extremely hard layer, for example structuration-bearing layer 30 that can be mode of DLC. In this respect, the hardness and modulus of the adhesion layer 20 is located in between the hardness and modulus of core or base 10 and structuration-bearing layer 30, and thereby can prevent cracking of structuration-bearing layer 30. Instead of a single structuration-bearing layer 30, there can be a deposition of a multilayer structure with steps S20, S30 and also S40 that can be repeated, such that an outer structuration-bearing layer 36 and later on also masking layer 40 is formed, with additional DLC layers 32, 34, as shown in the cross-sectional view of FIG. IB.

For example, deposition step S20 can be preferably carried out by a plasma-enhanced PVD (PEPVD) process, thereafter the deposition step S30 can be preferably carried out by a plasma-enhanced CVD (PECVD) process to deposit DLC, and can be performed by rotating the cylindrically-shaped metal cylinder or core or base 10 around its rotational axis with the rotation device and simultaneously exposing the cylindrical surface 12 to a highly energetic plasma. In this respect, DLC is created preferably using a CVD process in the same machine that can be used for PVD processes, for example the same processing chamber. The bonding of structuration-bearing layer 30 to base 10 is done via adhesion layer 20 to substantially increase adhesion between structuration-bearing layer 30 and a metallic surface of the base 10, as DLC, does not bond to metals directly.

The coatings of the adhesion layer 20 of step S20 and the structuration-bearing layer 30 of step S30 can comprise of one homogenous layer, a stack of chemically or structurally different layers, or of internally nanostructured layers where distinct phases inside the layer are formed through defined phase separation, or any combination thereof. These two steps S20 and S30 together with step S40 deposited later on can also be referred to as one multi-tiered deposition step S50, as they can happen inside the same deposition apparatus, sharing the same deposition chamber.

At this stage in the method, the outermost cylindrically-shaped exposed surface of processed cylindrically-shaped metal core or base 10, being either the outer surface of structuration-bearing layer 30 or outer surface the last layer of a multilayer structure, the outer structuration-bearing layer 36, preferably has a very small surface roughness, preferably having a surface profile roughness parameter (RA) to be below100 nm, more preferably below 50 nm, even more preferably below 30 nm to have excellent optical surface properties. This low roughness value is provided using a cylindrically shaped metal core or base 10 having an even lower surface profile roughness parameter RA, as described above.

Next, the method includes the step S40 of depositing a masking layer 40 on the hard-coating layer, e.g., the structuration-bearing layer 30 as shown in FIG. 1B, or the outer structuration-bearing layer 36, the masking layer 40 having a thickness of equal or less than 100 nm, preferably having a thickness in a range between 5 nm and less than 50 nm, more preferably in a range between 5 nm and 20 nm. The material used for the masking layer 40 needs to be a material suitable for resisting different types of etchants that will later be used to etch openings or cavities into the DLC layer, for example structuration-bearing layer 30 or outer structuration-bearing layer 36. For example, the masking layer 40 can be made of a thin layer of Cr, CrO, Ti, TiO₂, or SiO₂, preferably an inorganic layer, or combination of one or more such layers. Preferably, this step generates a layer of condensed matter, for example by performing another PECVD or PEPVD step where masking layer 40 is deposited on top of structuration-bearing layer 30 or outer structuration-bearing layer 36 while rotating the roll or base 10. As another variant, the masking layer 40 can be provided by atomic layer deposition (ALD), for example for depositing a TiO₂ or an Al₂O₃ masking layer.

In this context, masking layer 40 is not a traditional masking layer that is made of photoresist or a polymeric material, but is also a coating formed by a similar deposition step as the formation of structuration-bearing layer 30, is made to be very thin, and made of an inorganic material using a (PE)PVD deposition. Therefore and preferably, masking layer 40 is formed in a deposition step S40 that directly follows deposition step S30 of the structuration-bearing layer 30, for example by using the same deposition equipment, for example by using the same vacuum chamber in a way that the vacuum chamber is not unnecessarily vented between steps S30 and S40, and the temperature is not changed unnecessarily. This allows to provide for a built-in masking layer 40 for the later performed etching step S120, having a high structural continuity with structuration-bearing layer 30, such that masking layer 40 need not be removed for the resulting embossing device 200.

Next, a laser-ablation step S90 is performed as shown in FIG. 2B, or a selective mask-removal step S100/S110 where portions of the masking layer 40 are removed by performing material removal to masking layer 40, to form at least one etch opening 45 for etching. The etch openings 45 are formed at locations where, at a later stage in the method, the structural embossing features 210, 220, 210a, 220a are dug into structuration-bearing layer 30 or outer structuration-bearing layer 36 of the roll or base 10, 10a, by removing material from structuration bearing layer to form cavities or openings at an area of the etch openings 45. The laser-ablation step S90 can be performed by different types of laser ablation techniques, for example by direct laser engraving with a focused ultraviolet (UV) laser beam with a single Gaussian profile S60 or with a laser whose profile is controlled by a spatial light modulator (SLM) to create several focusing spots S80. In this step, the entire material of the masking layer 40 is removed at a certain surface area to define one or more etch openings 45, without affecting the surface of structuration-bearing layer 30 or outer structuration-bearing layer 36, or by only lightly affecting the surface area insubstantially. This can be done preferably using ultrafast laser sources in order to minimize the thermal effects that can occur during the ablation masking layer 40, or by using a low power nanosecond laser whose wavelength and power are carefully chosen so that masking layer 40 absorbs most of the laser power while keeping the thermal effect low enough to avoid any strong alteration of the structuration-bearing layer 30, 36, these layers exemplarily formed by DLC .

As an example, the ultrafast laser source for laser-ablation step S90 can be a laser with a wavelength between 250 nm and 1100 nm, pulse duration between 100 fs and 10 ps, frequency between 1 kHz and 10 MHz and a power between 1 W and 100 W. A laser ablation machine can be used in this task, such as the ones described in U.S. Patent No. 9,579,924, U.S. Patent No. 9,993,895, or in U.S. Patent No. 2017/0066079, these references herewith incorporated by reference in their entirety. As masking layer 40 is deposited to have a very small thickness, comparably low laser powers are sufficient to remove it with regards to a regular 3D laser ablation. The depth DEI, DE2 of structural features 210, 220, 210a, 220a into structuration-bearing layer 30, 36 is achieved by etching step S120 for example by a plasma process, following mask-ablation step S60, S100/S110 or a combination thereof as shown in FIG. 2C.

In variant, laser-ablation step S90 is configured such that it fully removes masking layer 40 at etch opening 45, but also causes grazing, i.e., slightly removing a very small portion of upper layer of structuration-bearing layer 30, 36, for example by choosing a more powerful laser or by increasing the ablation time. Thereafter, with the following etching step S120, material is removed from remaining portions of structuration-bearing layer 30, 36 to form surface cavities or openings into structuration-bearing layer 30, 36 that form structural features 210, 220, 210a, 220a at the locations of etch openings 45, and these can serve as structural embossing features of an embossing device 200. For this variant, it is preferable that structuration-bearing layer 30, 36 is only minimally structurally damaged or transformed from sp3 carbon by the heating with ablation laser of step S90, for example to avoid or minimize the formation of graphite on the surface of DLC and other heat-generated artifacts, so that the etching at etch opening 45 of DLC material with step S120 is not impacted. Graphite is chemically resistant to etchants that can remove DLC material, while thermodynamically-speaking unstable diamond of the DLC can react with oxygen to form e.g. CO₂ or a different oxycarbon during the etching. As indicated above, the etching process removes material from exposed areas at etch opening 45 without damaging the material, i.e., without inducing structural phase changes other than the removal.

In a variant, the step of laser ablation can also be performed by a mask projection technique S70 for selectively ablating masking layer 40 with a laser beam that has been masked with a separate laser mask at the at least one etch opening 45, for example as shown in U.S. Pat. Pub. Nos. 2012/0018993 and 2017/0066079, these references herewith incorporated by reference in their entirety. In case that multi-layered coatings are used as described below, the step of ablation S60, S100/S110 or a combination thereof and the step of etching S120 can be repeated any number of times on different locations of the surface to create hierarchical multi-layered structures 210, as shown in FIG. 2A and 2B and further discussed below.

In a variant, material removal on the masking layer 40 is not performed by laser ablation, but includes another process to form etch openings 45, for example an e-beam structuration S100, or for example by a separate etching step to remove material from masking layer 40, or by a focused ion beam.

The etch openings 45 themselves can have a variety of shapes, for example they can form an array layout with a plurality of longitudinal openings formed on the surface of structuration-bearing layer 30 parallel to a center axis CA of cylinder or roller 10, and a plurality of transversal openings formed on the surface of structuration-bearing layer 30 in a tangential direction, perpendicular to center axis CA. This allows forming diffractive structures into structuration-bearing layer 30 as structural features 210, 210a, including a plurality of first grooves at a first angular orientation and a plurality of second grooves at a second angular orientation substantially perpendicular to the first angular orientation. As an example, it is possible that structural features 210, 210a are formed that include diffractive structures, wherein a depth of the diffractive structures is between 50 nm and 10 µm, and a width of the diffractive structures is between 100 nm and 10 µm, with the diffractive structures having a periodicity being in a range between 0.1 µm and 10 µm, and the ratio between the depth and the width of the diffractive structures is in a range between 0.25 and 1.2.

In a variant, according to another aspect of the present invention, it is possible to form plasmonic structures into a substrate or a cylindrical base 10 with a method, with plasmonic structures that are properly tuned, with shapes of the plasmonic structures being accurate to a few nanometers. In this variant, hard-masking layer 40 can be directly ablated by e-beam structuring methods without any use of a structured photoresist/etching combination. Ultrathin hard-masking layers 40 used for direct e-beam ablation have a thickness that is preferably below 50 nm, more preferably below 30 nm, even more preferably in the range of 5 nm to 20 nm.

In another variant, after performing steps S10-S50, a step of e-beam writing or structuration S100 is performed to provide for a structured layer of e-beam resist 50 on top of masking layer 40 that is preferably ultrathin, inorganic, non-conducting. In a first intermediate step, hard-masking layer 40 is fully covered by a (photo-) sensitive resist by, e.g., by spin-coating, dip-coating, spray-coating or any other suitable method to provide a homogeneous, void-/pinhole-free resist layer. Then the resist is modified in its structural integrity by writing the required structure into the homogenous resist layer using an extremely finely focused electron-beam. The resist material typically consists of organic and/or polymer-based materials provided in liquid form. The thus exposed e-beam resist layer 50 is then developed and selectively removed in a mask development step S105 using chemical baths adapted to the chemistry of the resist layer, exposing the masking layer 40. Instead of performing direct ablation of the masking layer 40, masking layer 40 is then etched in a step S110, depending on the type of masking layer 40 used, for example by wet etching or dry etching. The etchant of step S110 is chosen not to be reactive to the material of the underlying structuration-bearing layer 30, so that only masking layer 40 exposed is removed. These steps S105 and S110 are optional steps of the embodiment discussed in this paragraph that are shown in dashed rectangular boxes of FIG. 1A.

Once the masking layer 40 is structured by e-beam technology as cited above, the method performs the previously-discussed etching step S120, for example a plasma step to etch the hard material from the structuration-bearing layer 30 to form structural features 210, 210a, for example by etching DLC material using O₂ or another type of plasma that can etch DLC. The resulting embossing roller 200 could then be used to emboss plasmonic structures on metallic paper or foils. Moreover, as another example, it would be possible to use the herein-described embossed device 200, for example an embossing cylinder or roller, to manufacture microstructures for the fast replication of microfluidic circuits by thermoplastic hot embossing of thermoplastic foils or plates, where the etch openings 45 could be the shape of the microfluidic circuit. One advantage of such method would be the fact that embossing roller 200 has exposed hard material, for example DLC, which could improve the release of some thermoplastics once molded inside the structural features 210 that form surface cavities. Other applications are also possible with the herein described embossing device 200. For example, an outline of an electric circuit could be formed by embossing to a conductive material, for example metallic material, for instance a radio-frequency identification (RFID) antenna that was previously engraved as a structural feature 210 to a roller. For example, using some special laminate paper with a metal layer, the roller 200 could be used to emboss the laminate paper to break out the metal layer to replicate an electric circuit or device.

Once the material of masking layer 40 is removed at the plurality of etch openings 45 for formation of structural embossing features 210, the structural embossing features 210 are formed by a step S120 of etching at a location of the openings 45, preferably a step of dry etching using plasma, as shown in FIG. 2B. In this step S120, etching is performed to remove material, specifically DLC material of structuration-bearing layer 30 or outer structuration-bearing layer 36, at the at least one opening of the masking layer 40 to form a surface cavity at the at least one opening, the surface cavity forming a structural embossing feature 210 into hard-coating layer 40 of a certain depth, thereby forming the structured embossing cylinder 200. Preferably, a depth of structural embossing feature 210 has a depth of more than 50 nm and less than 7 µm, more preferably less than 3 µm. With respect to a width of the structural embossing feature 210, the widths of one feature 210 can be in a range between 100 nm and 20 µm, more preferably up to 1.5 µm. The etching process of step S120 itself can be performed by reactive ion etching (RIE) inside an etching apparatus 400, for example but not limited to using oxygen (O₂) plasma, or CF₄ plasma, and can be performed by placing base or roll 10 into the center of a first cage electrode 430 and connect the, preferably cooled, electrode 420 via the thermo-electrical connection enabler 421 in the center of a plasma chamber 410 to the radio-frequency (RF) generator (not shown) of the plasma chamber, ensuring that a plasma is uniformly generated between the cage electrode 430 and the base or roll 10, as illustrated exemplarily in the cross-sectional view of FIG. 4. Moreover, masking layer 40 that has served as an etching mask for step S120 can be removed in an additional and optional step S120, or can remain on the structuration-bearing layer 30 to avoid further processing to safe costs and time. The masking layer 40 may be used up and gradually abrasively removed during use of embossing device 200. As masking layer 40 can be chosen to be very thin, its presence has no or only unnoticeable influence on the mechanical characteristics of embossing device 200.

As shown exemplarily in the cross-sectional view of FIG. 2C, this type of etching with step S120 allows to produce steep sidewalls of structural embossing features 210 at the edges of the etch opening 45, for example side walls having an angle with respect to an upper surface that are close to 90°, for example in a range between 75° and 90°. Moreover, the step of etching S120 allows to provide for structural embossing features 210 that have a high aspect ratio with respect to a ratio between a depth relative to the width, in other words to create structural embossing features 210 that are relatively deep in a radial direction as compared to a smaller width in a tangential or axial direction, for example but not limited to an aspect ratio in a range between 0.1 to 2, more preferably 0.25 and 1.2, for example to create relatively deep longitudinal grooves, channels, or trenches having such aspect ratio, arranged in any direction into structuration-bearing layer 30. However, structural embossing features 210 with smaller aspect rations are also possible. Moreover, step S120 allows making sure that a depth of the structural embossing feature 210 is substantially the same from an upper surface of structuration-bearing layer 30, taking into consideration that the upper surface has a cylindrical or arcuate shape.

By using the step S120 of etching, that can entirely replace an additional laser engraving or ablation step, or can be used in combination with an additional laser removal or cleaning technique, the effects that can be caused by the heat of the laser ablation on structuration-bearing layer 30 or outer structuration-bearing layer 36, for example in cases where structuration-bearing layer 30 or outer structuration-bearing layer 36 are made of DLCmaterial, can be substantially reduced or even entirely eliminated. In this respect, the heat generation during laser ablation at a location of material removal from structuration-bearing layer 30 or outer structuration-bearing layer 36 for forming structural features, for example the heat-affected zone (HAZ), can change the properties of DLC that leads to the formation of softer, sp2-bond-rich material from the original phase with its significant proportions of tetrahedrally sp3 bonded material. See for example Yasumaru et al., "Glassy carbon layer formed in diamond-like carbon films with femtosecond laser pulses," Applied Physics A, Vol. 79, No. 3, pp. 425-427, year 2004, and Miyaji et al., "Nanostructuring with Femtosecond Laser Pulses on Patterned DLC Surface," JLMN-Journals of Laser Micro/Nanoengineering, Vol. 3, No. 2, pp. 84-87, year 2008. While sp3-bonded carbon exhibits diamond-like characteristics regarding cohesion and hardness, in contrast thereto, sp2-bonded carbon primarily phases exhibit graphite-like properties including strongly reduced hardness and sheet-like morphology which makes them unsuitable for applications requiring hardness and overall structural integrity, such as high-aspect-ratio micro-structures, for example structural embossing features 210 discussed herein. As a result, the hardness of structuration-bearing layer 30 or outer structuration-bearing layer 36 can be severely reduced after a simple direct laser engraving or ablation, As the desired properties of structuration-bearing layer 30 or outer structuration-bearing layer 36 can be the hardness and structural integrity under mechanical stress, and these properties can stem directly from their sp3-bonding, a reduction in the fraction of sp3-bonding in conjunction with the increased presence of sp2-bonding is not desirable for any application of structural embossing features 210 and structured embossing device or cylinder 200, where high structural integrity and hardness is required.

In addition, the deposition and provision of masking layer 40 with step S40 of depositing and tuning of the ablation parameters for the ablation or engraving laser when forming etch openings 45 into masking layer 40 with laser-ablation step S90 can lead to a minimization of the formation of sp2-bonding-rich phase in structuration-bearing layer 30 or outer structuration-bearing layer 36, and can also reduce or minimize other detrimental effects to the structural integrity of structuration-bearing layer 30 or outer structuration-bearing layer 36. By using a plasma etching process with step S120 to gain a certain depth DEI, DE2 of structural embossing features 210, a potential formation of graphite from the carbon-based material of structuration-bearing layer 30, 36 around structural embossing features 210 is prevented, as the material removal through reactive etching using for example but not limited to an oxygen plasma is achieved primarily due to a chemical reaction and not through thermal decomposition as it would be in the case of direct laser engraving or ablation.

Moreover, with the step S40 of depositing a masking layer 40, it is possible to provide for an ultra-thin inorganic coating as the masking layer 40 which presents the advantage that masking layer 40 can remain on the surface of the unstructured portions of structuration-bearing layer 30 or outer structuration-bearing layer 36, e.g., at the areas where no etch openings 45 are present, and does not have to be specifically removed, unlike traditional polymeric or otherwise organic masking materials. Not having to perform an additional stripping and or cleaning step for removing a masking layer 40, or for removal of another type of mask that is different from the herein-described masking layer 40 after structuration by the etching step S120 can greatly reduce processing time and can be an important cost reduction factor, and can also reduce the environmental impact of the process posed by typical solvents and stripping solutions used to remove traditional organic masking layers. The extremely low thickness of the masking layer 40 is such that it does not influence the mechanical performance of the resulting embossing tool formed by embossed device 200 when masking layer 40 remains on the surface of structuration-bearing layer 30 or outer structuration-bearing layer 36. The very low thickness, for example in a range of only several nanometers, further means that contamination to any type of surface through abrasion of the masking layer 40 will also me minimal and likely unnoticed.

Moreover, in a variant, multiple rounds of deposition of steps S30, for example the PECVD deposition step, for forming structuration-bearing layer 30 and deposition steps S40 for deposit a masking layer 40, for example by PEPVD, can be performed, to create the multi-layer structure on top of adhesion layer 20 with alternating mask- and structuration-bearing layers, as shown in the cross-sectional view of FIG. 2A, showing an adhesion layer 20, a first inner structure bearing layer 32 made of a hard material coating, a first inner masking layer 42, a second outer structure bearing layer 36 made of a hard material, and a second outer masking layer 46. This multilayer structure allows forming multilayered three-dimensional openings or structural features 210 into embossing device 200 by successive mask removal steps S90, S100/S110 or a combination thereof for removing portions of masking layers 46, 42, respectively, and etching steps S120 for removing material of structure bearing layers 36, 32. In other words, this allows to create multi-layered structural features 210 into embossing device 200, by the use of sequential laser removal steps S90 for removing mask portions of a masking layers 46, 42, to form etch openings 45, 47, respectively, and etching steps S120 for removing portions of structure bearing layers 36, 32 at form etch openings 45, 47, respectively, as shown in FIG. 2B. In the variant shown, exemplarily, two (2) masking layers 42, 46 and two (2) structuration-bearing layers 32, 36 are shown that alternate each other, but there can be more than two (2) pairs of such layers, to provide for more complex multi-layered structural features 210, for example three, four, five, or more masking and structuration-bearing layer pairs. For example, multi-layered structural features 210 can be used to form complex three-dimensional (3D) shapes as openings or cavities in the surface of embossed device 200, for example as injection mold devices having mold cavities for different types of casting processes. In the case of multiple masking-layer/DLC stacks, the masking layers that do not represent the outermost layer on the outermost DLC layer will be made up of a material of primarily non-metallic character such as a nitride, oxide or carbide to ensure adhesion of the following DLC layer.

FIG. 2B shows multi-layered structural features 210 formed into embossing device 200, each structuration 210 made of a first, wider structuration 210.1 formed into outer structuration-bearing layer 36 and outer etch opening 45 of the outer masking layer 46, and a second, narrower, inner structuration 210.2 formed into inner structuration-bearing layer 32 and inner etch opening 47 of the inner masking layer 42. To form multi-layered structural features 210, a first laser-ablation step S90 is performed to remove etch openings 45 at desired locations of outer masking layer 46. Thereafter, a first etching step S120 is performed to remove material of outer structuration-bearing layer 36 to form wider structuration 210.1, until the upper surface of the inner masking layer 42 is reached. Next, a second laser-ablation step S90 performed to remove etch openings 47 at desired locations of inner masking layer 42. Preferably, etch openings 47 are smaller in surface, for example less wide and/or less long as compared to an opening formed by wider structuration 210.1. Thereafter, a second etching step S120 is performed to remove material of inner structuration-bearing layer 32 to form narrower structuration 210.2. This step is performed selectively such that a depth or thickness of narrower structuration 210.2 in a radial direction is such that upper surface of adhesion layer 20 is not reached, as shown in FIG. 2B. If more masking layer - structuration-bearing layer pairs are present, more steps S90, S100/S110 or a combination thereof and S120 can be repeated for forming additional structural features in a radial depth direction of embossed device 200.

According to another aspect of the present invention, a device is provided, preferably manufactured by the herein described method, the device being a mold-type device, for example an injection mold or a cylindrical mold for cast-release or thermoplastic hot embossing, based on the device or cylinder 200 described herein. In this variant, one or more molding cavities can be formed by the structural embossing features 210.

According to at least some aspects of the present invention, the herein presented method for manufacturing an embossed device 200, for example an embossing cylinder, drum, or roller, and the corresponding embossed device 200, poses several advantages compared to the state-of-the-art, where hard layers are ablated directly to form structural features in a hard coating for example by using a nanosecond or ultrafast laser. Efficient direct laser processing is always accompanied by the apparition of a heat-affected zone (HAZ). The spread of the HAZ is very important with nanosecond lasers. With ultrafast lasers, picosecond and femtosecond lasers, the HAZ is reduced, but still present and a factor to consider. Some hard layers, in particular DLC, for example the Ta-C variant, are sensitive to heat since excessive heating in combination with oxygen can change the carbon lattice from a diamond-like structure into a weaker configuration. Processing of DLC therefore requires an essentially non-thermal process, where there is no heating up to temperatures necessary for structural phase transformations of the material of the structuration-bearing layer to be induced under the environmental conditions the processing takes place in.

According to aspects of the present invention, laser ablation is performed with step S90 to make etch openings 45, 47 using low power that is only going to affect the masking layer 40, 42, 46 and not the structure-bearing layer 30, 32, 36 beneath it. The actual engraving or material removal from structure-bearing layer 30, 32, 36 to form structural features 210 being performed by etching in one or more steps S120, it does not endure excessive heating and the integrity of the crystal lattice of the DLC is intact. Therefore, the physical properties of the hard coating that forms structure-bearing layer 30, 32, 36 remain unchanged.

According to some other aspects of the present invention, the step S90 of laser ablation is performed in a single pass to remove parts of the masking layer 40, 42, 46. The deep engraving or material removal by etching step S120 is performed in parallel over the entire surface in a single step for example with plasma-etching equipment. This means that for large pieces, the engraving or material removal time that corresponds to a duration of one or more etching steps S120 can be dramatically reduced, compared to a process where the engraving or material removal is done by laser ablation or laser material removal, where it is necessary to pass several times over the same place to achieve the desired structure depth into the hard material of structure-bearing layers 30, 32, 36. Furthermore, the engraving of the structure done by plasma etching in a step S120 allows for a very fine control over the depth DEI, DE2 of the etching, as well as obtaining very large aspect ratio structures thanks to the anisotropic etching of the hard layer.

While the invention has been disclosed with reference to certain preferred embodiments, numerous modifications, alterations, and changes to the described embodiments are possible without departing from the sphere and scope of the invention, as defined in the appended claims and their equivalents thereof. Accordingly, it is intended that the invention not be limited to the described embodiments, but that it has the full scope defined by the language of the following claims.

## Claims

1. A method for manufacturing a structured embossing cylinder for embossing system comprising the steps of:
providing a hard-coated embossing roller having a cylindrically-shaped core and a hard-coating layer on the cylindrically-shaped core, the hard-coating layer having a thickness in a range between 1 µm and 10 µm, and having a surface-roughness value RA of less than 100 nm;
depositing a masking layer on the hard-coating layer, the masking layer having a thickness of equal to or less than 100 nm;
removing material from the masking layer to form at least one opening; and
etching to remove material at the at least one opening of the masking layer from the hard-coating layer to form a surface cavity in the hard-coating layer at the at least one opening, the surface cavity forming a structural embossing feature into the hard-coating layer, thereby forming the structured embossing cylinder.

2. The method for manufacturing the structured embossing cylinder according to claim 1, wherein the hard-coating layer includes PECVD-deposited diamond-like carbon (DLC).

3. The method for manufacturing the structured embossing cylinder according to claim 1, wherein the thickness of the masking layer is more than 5 nm and less than 50 nm.

4. The method for manufacturing the structured embossing cylinder according to claim 1, wherein the masking layer includes an inorganic material.

5. The method for manufacturing the structured embossing cylinder according to claim 1, wherein the step of removing material from the masking layer is performed by laser ablation.

6. The method for manufacturing the structured embossing cylinder according to claim 1, wherein the step of removing material from the masking layer is performed by e-beam structuration.

7. The method for manufacturing the structured embossing cylinder according to claim 5, wherein the step of performing the laser ablation on the masking layer includes using direct laser ablation, using a mask projection of a laser beam, or using a spatial light modulator (SLM) to shape a laser beam.

8. The method for manufacturing the structured embossing cylinder according to claim 6, wherein in the step of performing e-beam structuration, the masking layer has a thickness of equal or less than 50 nm.

9. The method for manufacturing the structured embossing cylinder according to claim 1, wherein in the step of etching of the hard-coating layer includes a plasma-assisted reactive-ion etching.

10. The method for manufacturing the structured embossing cylinder according to claim 1, wherein in the step of etching includes wet etching.

11. The method for manufacturing the structured embossing cylinder according to claim 1, wherein the surface cavity formed in the step of etching has a depth of more than 50 nm and less than 7 µm.

12. A method for manufacturing a structured embossing cylinder for a embossing system comprising the steps of:
providing a hard-coated embossing roller having a cylindrically-shaped core and a hard-coating layer on the cylindrically-shaped core, the hard-coating layer having a thickness in a range between 1 µm and 10 µm, and having a surface-roughness value RA of less than 100 nm;
depositing a masking layer on the hard-coating layer, the masking layer having a thickness of equal or less than 100 nm;
performing e-beam writing into a provided e-beam resist layer on top of the masking layer;
developing and removing e-beam resist layer to exposing the masking layer;
etching the masking layer with an etchant that does not affect the hard-coating layer; and
etching the hard-coating layer to form a surface cavity into the hard-coating layer, the surface cavity forming a structural embossing feature into the hard-coating layer.

13. A structured embossing device comprising:
a base;
an adhesion layer on the base;
a hard-coating layer on the adhesion layer having a thickness in a range between 1 µm and 10 µm and an RA roughness value of less than 100 nm;
an inorganic masking layer on the hard-coating layer having a thickness of less than 100 nm; and
an embossing structuration arranged in a surface of the hard-coating layer, the embossing structuration traversing the masking layer, and
wherein a depth of a surface cavity formed by the embossing structuration is between 50 nm and 7 µm, and a width of the surface cavity is between 100 nm and 10 µm.

14. The structured embossing device according to claim 13, wherein the ratio between the depth and the width of the cavity is in a range between 0.1 and 2.

15. The structured embossing device according to claim 13, wherein the base includes a cylinder made of a metal, ceramic, or composite material.

16. The structured embossing device according to claim 13, wherein the base includes a plate made of a metal, ceramic, or composite material.

17. The structured embossing device according to claim 13, wherein the surface cavity that is forming the embossing structuration is in the form of a groove or trench.

18. The structured embossing device according to claim 13, wherein the surface cavity that is forming the embossing structuration includes a diffractive grating.

19. An injection mold comprising:
a base;
an adhesion layer on the base;
a hard-coating layer on the adhesion layer having a thickness in a range between 1 µm and 10 µm and an RA roughness value of less than 100 nm;
an inorganic masking layer on the hard-coating layer having a thickness of less than 100 nm; and
a molding cavity arranged in a surface of the hard-coating layer, the molding cavity traversing the masking layer, and
wherein a depth of a surface opening formed by the molding cavity is between 50 nm and 7 µm, and a width of the surface cavity is between 100 nm and 10 µm.
